# EUROPEAN PATENT APPLICATION

(11) **EP 2 146 495 A1**
(43) Date of publication of application: **20.01.2010**
(21) Application number: 08160730.1
(22) Date of filing: 18.07.2008
(51) Int. Cl.: H04M 3/51, H04M 3/487

(54) **Control system and method for call handling in interactive advertisement participation**

(71) Applicant: 2waytraffic, 1217 HS Hilversum (NL)
(72) Inventor: van den Heuvel, Yuri, 1217 HS, Hilversum (NL); Abrahams, Cornelis Gijsbert, 1217 HS, Hilversum (NL)
(74) Representative: Ketelaars, Maarten F.J.M.

(57) **Abstract**

Control system (7) and method for an interactive response system handling inbound calls (10) in reaction to a message, the control system (7) being connected to an interactive voice response (IVR) system (2), in which the control system (7) is arranged to control and monitor the handling of inbound calls (10) received by the IVR system (2). The control system (7) comprises a capacity management system (3) that derives
- the capacity limit for the number of simultaneous calls that can be handled directly, by the capacity of the IVR system (2) or the capacity of call center,
- if receiving a further inbound call (10), check whether or not the number of actual simultaneous calls is above the capacity limit, and if so:
- derive identification information for the further call; and
- forward the identification information to the IVR system (2) for executing an outbound call (i.e. calling back the caller) at a later moment in time.
Further embodiment shows playing of advertisings by the IVR to the calling subscriber. The advert that is generating the most leads is played the most frequently to the callers.

## Description

### Field of the invention

The present invention relates to a control system and method for call handling in interactive advertisements participation, e.g. in response to advertisement messages shown on television.

### Prior art

Systems and methods exist in which responses to advertisements, e.g. in response to a television advertisement showing a telephone number, are used to optimize the generation of leads for advertisers. US patent application 2005/135575 discloses an interactive voice response system in which a synthetic speech generation is delayed when it is established that future resource usage exceeds a given capacity.

### Summary of the invention

Present control systems and methods have a number of disadvantages, especially relating to capacity and manner of response when capacity is limited or exceeded.

According to the present invention, a control system for an interactive response system handling inbound calls in reaction to a message (such as a (TV) advertisement) is provided, the control system being connected to an interactive voice response (IVR) system (and optionally a call centre), in which the control system is arranged to control and monitor the handling of inbound calls received by the IVR system. This allows to monitor the actually used capacity and, when necessary, take precautionary action to maximize the number of received incoming calls.

In a further embodiment, the control system comprises a capacity management system arranged to set a capacity limit for the number of simultaneous calls to be handled directly by the IVR system, if receiving a further inbound call, check whether or not the number of actual simultaneous calls is above the capacity limit, and if so derive identification information (such as using automatic number identification (ANT) or Caller ID) for the further inbound call, and forward the identification information to the IVR system for executing an outbound call at a later moment in time. The identification information can be stored in the IVR system in an outbound call queue, which will be emptied by the IVR system when capacity allows, e.g. using a first-in-first-out queuing.

The capacity management system controls the IVR system in a further embodiment to play an audio message (of short duration) in response to the further inbound call. This allows to inform the caller that he/she will be called back later, and minimizes the time an inbound call is active, thus lowering the actual capacity request.

In a further embodiment, the control system further comprising a call centre management system connected to the capacity management system, in which the call centre management system is arranged to determine the capacity limit based on an input capacity of the IVR system and to relay the capacity limit to the capacity management system. This allows to very efficiently use the present control system without any or hardly any modifications to the IVR system itself.

The control system further comprises a call centre management system connected to the capacity management system in another embodiment, in which the call centre management system is arranged to determine the capacity limit based on a capacity of a call centre connected to the IVR system. This allows to take into account a further possible bottle neck in handling incoming calls.

The capacity management system is in an even further embodiment arranged to control timing of the outbound calls dependent on an external parameter. E.g. in this manner it is possible to avoid call back during an on air promotion, and to maximize the actual available capacity of the IVR system during on air promotions.

In a further embodiment, the control system comprises an advertisement priority planning tool connected to the IVR system, the advertisement priority planning tool being arranged to set a population level for a group of inbound calls (e.g. 10), assign an advertisement from a plurality of n advertisements to each of a first to n-th group (e.g. n=2, 3, ...) of inbound calls, and control the IVR system to present, when receiving an inbound call, the advertisement assigned to the associated group, in which the advertisement priority planning tool is further arranged to determine a score for each advertisement presented (e.g. over a fixed time period, by counting, frequency measurement, ...) and to prioritize advertisements for the next n groups of inbound calls. This allows to provide the advertiser associated with the advertisement generating the most leads to obtain a higher prioritized exposure.

In a further aspect, the present invention relates to a method for management of inbound calls to an interactive response system handling inbound calls in reaction to a message, comprising receiving an inbound call and handling the inbound call using an interactive voice response (IVR) system, setting a capacity limit for the number of simultaneous calls to be handled directly by the IVR system, if receiving a further inbound call, checking whether or not the number of actual simultaneous calls is above the capacity limit, and if so deriving identification information (ANI. Caller ID,...) for the further inbound call, and forwarding the identification information to the IVR system for executing an outbound call at a later moment in time. This method provides similar capabilities and advantages as those mentioned above in relation to the present invention control system embodiments.

In a further embodiment, the method further comprising playing an audio message (of short duration) to the further inbound call, announcing and explaining the later call back.

Timing of the outbound calls is controlled dependent on an external parameter, e.g. the timing of advertisements played on a TV, radio or other media channel. This allows to avoid call backs being executed during on air promotion and to maximize the capacity of the IVR system during on air promotions.

The capacity limit is determined by an input capacity of the IVR system in a further embodiment. Additionally, or alternatively, the capacity limit is determined by a capacity of a call centre connected to the IVR system.

In a further embodiment, executing an outbound call is implemented using a call back function of an associated communication network. This is very efficient, as no functionality or hardware needs to be added, as it's already available.

Furthermore, the present invention relates to a method for management of inbound calls to an interactive response system handling inbound calls in reaction to a message, comprising receiving an inbound call and handling the inbound call using an interactive voice response (IVR) system, setting a population level for a group of inbound calls (e.g. 10), assigning an advertisement from a plurality of n advertisements to each of a first to n-th group (n=2, 3, ...) of inbound calls, and controlling the IVR system to present, when receiving an inbound call, the advertisement assigned to the associated group, determining a score for each advertisement presented and prioritizing advertisements for the next n groups of inbound calls. This allows the advertisement providing the most leads (i.e. reactions from viewers/listeners) to obtain maximum and prioritized exposure.

In an even further aspect, the present invention relates to a computer program product comprising computer executable code which when loaded on a control system, provides the control system with the functionality according to any one of the method embodiments described above.

### Short description of drawings

The present invention will be discussed in more detail below, using a number of exemplary embodiments, with reference to the attached drawings, in which
Fig. 1 shows a schematic view of an embodiment of a control system for an interactive voice response system;
Fig. 2 shows a schematic view of a further embodiment in which a capacity management system is used to control the IVR system;
Fig. 3 shows a schematic view of yet a further embodiment in which an advertisement priority planning tool is used to control the IVR system.

### Detailed description of exemplary embodiments

The present application relates to an interactive service which allows (TV) viewers to participate to a (TV) shows by telephone, mobile phone or the internet. In general this will be a toll free number, so no costs are involved to participate. The participant can participate by voting, polling, answering questions and it is even possible to leave their comment which can be used in the shows. To thank the participant, they will receive an exclusive offer (which is e.g. matched with the profile of the caller) by an advertiser. If a participant would like to receive the exclusive offer, they will be connected straightaway to a call centre or alternatively they will receive the information by post or email. The advertisers will pay for this model on a per lead cost basis.

A problem for these kind of system is that the system for handling the (mobile) calls (usually an interactive voice response (IVR) system) has only limited handling capacity, and also the possibly needed call centre has only a limited capacity (usually human resources limited). This might cause a participant receiving a busy line signal when calling, and usually such a participant is lost.

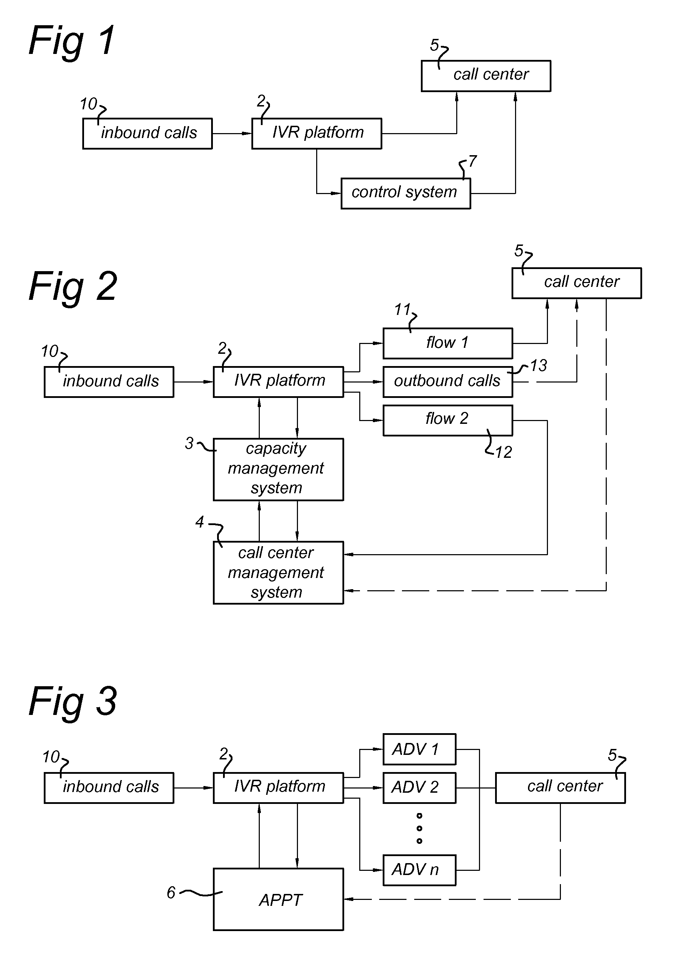

According to the present invention, a control system 7 is provided as shown in the schematic diagram of Fig. 1. The control system 7 is connected to the IVR system or platform 2 which is arranged to receive the inbound calls 10, and optionally also to the call centre 5. The control system 7 is furthermore arranged to control handling of inbound calls received by the IVR system 2, i.e. to monitor and influence the order and manner of handling of the inbound calls 10. The connection to the call centre 5 is in most embodiments of the present invention used to monitor progress of handling of calls and to collect statistical data associated with the handled calls..

According to a further embodiment of the present invention additional measures are taken to prevent a participant from receiving a busy signal or no connection at all. In Fig. 2, a schematic diagram is shown in which an embodiment of the present method may be implemented.

Inbound calls 10 originating from participants are received in an IVR platform 2, which as such is known to the person skilled in the art. The IVR platform 2 is connected to and controlled by a capacity management system 3, which in its turn is connected to a (general) call centre managements system 4.

In a normal prior art system, the IVR platform 2 would receive inbound call 10 and e.g. forward these to a call centre 5 (indicated by the 'FLOW1' block in Fig. 2). In the call centre, operators would receive and process the calls, e.g. as an interview. Alternatively, the IVR platform 2 could be arranged to present questions as prerecorded playback messages to the participant, and process received responses (e.g. by presenting choices and recording DTMF responses).

In a further embodiment of the present invention the IVR platform 2 is controlled by a capacity management system 3. This capacity management system controls the IVR platform 2 to divide the inbound calls 10 in a first flow 11 (FLOW1) and a second flow 12 (FLOW2) depending on a capacity limit. Furthermore, it receives from the IVR platform 2 data about the actual (momentary) number of inbound calls 10.

Furthermore, the capacity management system 3 is connected to a call centre management system 4. This call centre management system 4 receives information about the status of call centre 5 (technical and other data), and also data associated with the second flow 12.

The capacity limit is e.g. determined by the actual hardware limitations of the IVR platform 2 with respect to number of connections to an associated communication network or the capacity in handling calls at the same time. The promotion of a telephone number via mass media might result in a peak-traffic moment exceeding the certain number. Alternatively, the capacity limit is determined by the capacity of the handling possibilities of the call centre 5 (e.g. the number of available lines (technical limit) or the number of people working at the specific call centre (human resource limit)). Furthermore, the capacity limit may be determined by the capacity management system 3 intermittently (e.g. every hour) or dynamically (i.e. changing from second to second). The necessary data can be obtained directly (e.g. from IVR platform 2) or indirectly (e.g. from call centre 5 via call centre management system 4).

If the IVR platform 2 receives a new call (further inbound call), and the actual number of inbound calls is lower than the capacity limit, the new call will be treated as normal by the IVR platform 2 (i.e. an interview is started using interactive voice response or the call is transferred to the call centre 5).

However, if the capacity limit is exceeded, the further inbound call 10 will be handled as a second flow 12 call. For this second flow 12 the identification information of the further inbound call is extracted (e.g. by using automatic number identification (ANI) or calling line identification (CLI) techniques), and relayed to the IVR platform 2. Also, the further inbound call is addressed using a (short) message (e.g. a prerecorded message stored in the IVR platform 2) that the present capacity is exceeded and that the participant will be called back at a later moment in time. Furthermore, the identification of that caller is put in a call-back list or call-back queue for later call back.

As soon as the actual capacity of the IVR platform 2, the call centre 5, or both, allows, the first number on the call-back list is retrieved, and an outbound call 13 is set up to the associated participant. As long as sufficient capacity is available, the capacity management system 3 continues to empty the call-back list.

In a further embodiment, executing an outbound call under control of the call centre management system 4 or capacity management system 3 may be implemented using a call back function of an associated communication network from which the inbound calls 10 originate. This eliminates the need to implement a cal back function in any one of the functional units (IVR platform 2, capacity management system 3 or call centre management system 4) of the embodiment of Fig. 2.

The call centre management system 4 can also use further parameters to control the execution of outbound calls 13, even external parameters to the call handling. An example of such an external parameter is the timing of related on air promotions. During an on air promotion, the emptying of the call-back list by executing outbound calls is suspended, in order to free as much capacity as possible of the IVR system 2 to allow direct handling of inbound calls 10 (i.e. first flow 11).

The IVR platform 2, Capacity Management System 3 and Call Centre Management System 4 are indicated as separate functional entities in the embodiment described above. Each of these entities may be implemented on a data processing system, comprising one or more processors, memory and suitable interfacing circuitry to perform the desired functionality. The data processing systems may run under the control of an operating system and a software program comprising computer executable instructions, which may be stored in the memory or loaded into memory during runtime. Alternatively, two or all of the entities 2-4 are combined in a single data processing system which provides the functionalities of the various entities.

The call centre management system 4 may furthermore be arranged to provide further control of the IVR platform 2 and the call centre 5. Examples of these functions include, but are not limited to uploading voice files to the IVR platform 2, which will be played back when an inbound call is placed in the second flow 12, and e.g. reporting actual data on usage of the IVR platform 2 and the call centre 5.

In a further embodiment the IVR platform 2 is also connected to an advertiser priority planning tool 6, as shown in the schematic view of Fig. 3. The advertiser priority planning tool 6 is connected to the IVR platform 2, and optionally also to the call centre 5.

The functionality of this embodiment may be added to an existing advertising system in which advertisement messages, interactive voice response sessions or call centre sessions (e.g. for offering a product or service) are chosen dependent on a stored profile of subscribing participants. When a participant makes an inbound call 10, it is checked whether or not the participant is a subscriber (e.g. using automatic number identification or other identification techniques and a check in a database with subscriber identifications). If so, the participant may be presented with an appropriate advertisement, e.g. including a special offer using the IVR platform 2. Once the participant agrees to accept the offer, the call may be transferred to the call centre 5 for further processing of the offer. When a participant makes an inbound call 10 in reaction to a TV program, and the participant is not a subscriber (or more general, where no profile data of the participant is known), a general advertisement is chosen.

In the present embodiment, a number of general advertisements (e.g. three) are stored or available. First, a population level is selected, e.g. corresponding to a group of ten participants placing an inbound call 10. For each available general advertisement, the flow of inbound calls 10 is divided using the population level, i.e. the first ten inbound calls will be presented with advertisement number one, the next ten with advertisement two and again the next ten with advertisement three.

The advertiser priority planning tool 6 is arranged to collect data about the reaction of the participant to the advertisement he/she is presented. Parameters that may be stored are e.g. when a participant actually listens to the entire message, or when a participant decides to buy a product or service after being presented with the advertisement. Each of the general advertisements thus receives a score based on these parameters (leads).

The advertiser priority planning tool 6 then prioritizes the available general advertisements based on the respective score. The advertiser priority planning tool 6 then again assigns the general advertisements available to the next groups of inbound calls 10. By fine-tuning the population level, it can thus be assured that the general advertisement generating the most leads is using the available capacity first.

This embodiment may be used in combination with the embodiment described with reference to Fig. 2, and the functional entities capacity management system 3, call centre management system 4 and advertisement priority planning tool 6 may be integrated in the single control system 7 as shown in Fig. 1. In this combined embodiment, the general advertisement generating the lowest number of leads will be most likely to be assigned to the second flow 12, which will only hear the associated advertisement at a later moment in time using the outbound calls 13.

The advertiser priority planning tool 6 may be further arranged to execute further statistical analysis and possibly random checks in order to maximize the lead conversion. In this manner each of the general advertisements may be given equal opportunity to become the highest ranked advertisement.

Also in this embodiment, the advertiser priority planning tool 6 may be a dedicated system providing the functionality as described above. As an alternative, the functionality may be provided by another hardware unit, e.g. the control system 7 of Fig. 1 under control of a software program having computer executable instructions.

## Claims

1. Control system for an interactive response system handling inbound calls (10) in reaction to a message, the control system (7) being connected to an interactive voice response (IVR) system (10), in which the control system (7) is arranged to control and monitor the handling of inbound calls (10) received by the IVR system (2).

2. Control system according to claim 1, in which the control system (7) comprises a capacity management system (3) arranged to
- set a capacity limit for the number of simultaneous calls to be handled directly by the IVR system (2),
- if receiving a further inbound call (10), check whether or not the number of actual simultaneous calls is above the capacity limit, and if so:
- derive identification information for the further inbound call (10); and
- forward the identification information to the IVR system (2) for executing an outbound call at a later moment in time.

3. Control system according to claim 2, in which the capacity management system (3) controls the IVR system (2) to play an audio message in response to the further inbound call (10).

4. Control system according to claim 2 or 3, further comprising a call centre management system (4) connected to the capacity management system (3), in which the call centre management system (4) is arranged to determine the capacity limit based on an input capacity of the IVR system (2) and to relay the capacity limit to the capacity management system (3).

5. Control system according to claim 2 or 3, further comprising a call centre management system (4) connected to the capacity management system (3), in which the call centre management system (4) is arranged to determine the capacity limit based on a capacity of a call centre (5) connected to the IVR system (2).

6. Control system according to any one of claims 2-5, in which the capacity management system (3) is arranged to control timing of the outbound calls dependent on an external parameter.

7. Control system according to any one of claims 1-6, in which the control system (7) comprises an advertisement priority planning tool (6) connected to the IVR system (2), the advertisement priority planning tool (6) being arranged to
- set a population level for a group of inbound calls (10);
- assign an advertisement from a plurality of n advertisements to each of a first to n-th group of inbound calls (10), and
- control the IVR system (2) to present, when receiving an inbound call (10), the advertisement assigned to the associated group,
in which the advertisement priority planning tool (6) is further arranged to determine a score for each advertisement presented and to prioritize advertisements for the next n groups of inbound calls (10).

8. Method for management of inbound calls (10) to an interactive response system handling inbound calls (10) in reaction to a message, comprising:
- receiving an inbound call (10) and handling the inbound call using an interactive voice response (IVR) system (2),
- setting a capacity limit for the number of simultaneous calls to be handled directly by the IVR system (2),
- if receiving a further inbound call (10), checking whether or not the number of actual simultaneous calls is above the capacity limit, and if so:
- deriving identification information for the further inbound call; and
- forwarding the identification information to the IVR system (2) for executing an outbound call at a later moment in time.

9. Method according to claim 8, further comprising playing an audio message to the further inbound call (10).

10. Method according to claim 8 or 9, in which timing of the outbound calls is controlled dependent on an external parameter.

11. Method according to any one of claims 8-10, in which the capacity limit is determined by an input capacity of the IVR system (2).

12. Method according to any one of claims 8-11, in which the capacity limit is determined by a capacity of a call centre (5) connected to the IVR system (2).

13. Method according to any one of claims 8-12, in which executing an outbound call is implemented using a call back function of an associated communication network.

14. Method for management of inbound calls (10) to an interactive response system handling inbound calls (10) in reaction to a message, comprising:
- receiving an inbound call and handling the inbound call (10) using an interactive voice response (IVR) system (2),
- setting a population level for a group of inbound calls (10);
- assigning an advertisement from a plurality of n advertisements to each of a first to n-th group of inbound calls (10), and
- controlling the IVR system (2) to present, when receiving an inbound call (10), the advertisement assigned to the associated group,
- determining a score for each advertisement presented and
- prioritizing advertisements for the next n groups of inbound calls (10).

15. Computer program product comprising computer executable code which when loaded on a control system (7), provides the control system (7) with the functionality according to any one of the method claims 8-14.
